# EUROPÄISCHE PATENTSCHRIFT

(11) **EP 4 121 195 B1**
(45) Veröffentlichungstag und Bekanntmachung des Hinweises auf die Patenterteilung: **28.02.2024**
(21) Anmeldenummer: 20845151.8
(22) Anmeldetag: 18.12.2020
(51) Int. Cl.: B01D 46/52

(54) **ABSCHEIDEELEMENT, FILTERSYSTEM SOWIE VERFAHREN ZUR HERSTELLUNG EINES ABSCHEIDEELEMENTS**
SEPARATION ELEMENT, FILTER SYSTEM, AND METHOD FOR PRODUCING A SEPARATION ELEMENT
ÉLÉMENT DE SÉPARATION, SYSTÈME DE FILTRATION ET PROCÉDÉ POUR PRODUIRE UN ÉLÉMENT DE SÉPARATION

(30) Priorität: 17.03.2020 DE 102020107345
(43) Veröffentlichungstag der Anmeldung: 25.01.2023
(73) Patentinhaber: MANN+HUMMEL LIFE SCIENCES & ENVIRONMENT HOLDING SINGAPORE PTE. LTD., Singapore 139234 (SG)
(72) Erfinder: PRICE, Andrew, 58256 Ennepetal (DE); KOEHN, Jörg, 45138 Essen (DE); WOITOLL, Ina, 74360 Ilsfeld (DE)
(74) Vertreter: Mann + Hummel Intellectual Property
(86) Internationale Anmeldenummer: PCT/EP2020/087064
(87) Internationale Veröffentlichungsnummer: WO 2021/185477

(56) Entgegenhaltungen:
- DE-U- 1 970 842
- JP-A- 2002 126 432
- JP-A- 2002 166 113
- US-A- 2 952 333

## Beschreibung

### Technisches Gebiet

Die Erfindung betrifft ein Abscheideelement nach dem Oberbegriff des Anspruchs 1 sowie ein Filtersystem nach dem Oberbegriff des Anspruchs 8. Die vorliegende Erfindung betrifft des Weiteren ein Verfahren nach dem Oberbegriff des Anspruchs 9.

Die vorliegende Erfndung betrifft insbesondere einen Koaleszenz-Filter zum Einsatz in ein Filtersystem zur Verwendung in Fabriken zur Abscheidung von Ölaerosolen aus der Abluft von Maschinen und Bearbeitungsprozessen unterschiedlicher Anwendungsbereiche wie etwa Spanen, Umformen, Walzen und Pressen, Schleifen und Härten. Beispielsweise betrifft die vorliegende Erfndung einen Koaleszenz-Filter zum Einsatz in ein Filtersystem zur Abscheidung von Ölaerosolen aus der Abluft von zerspanenden Fertigungsmaschinen, etwa von Fräsmaschinen oder Drehmaschinen.

### Stand der Technik

Bei zerspanenden Fertigungsmaschinen wird beim Abtragen von Material Kühlschmiermittel auf die Schneide aufgebracht. Dieses Kühlschmiermittel verdampft an der Schneide oder wird durch die Drehbewegungen der Schneide zerstäubt, wobei ein feiner ölhaltiger Flüssigkeitsnebel, ein Ölaerosol, entsteht. Des Weiteren kann bei der Bearbeitung mit Fertigungsmaschinen ein Trennmitteldämpfe aufweisendes Ölaerosol entstehen, wenn beispielsweise Trennmittel in die offenen Formhälften von Blasformteilen eingesprüht werden.

Dieses Ölaerosol ist gesundheitsgefährdend für die Anwender, welche die Fertigungsmaschinen bedienen, da die feinen Partikel lungengängig sein können. Zudem führt ein freier Austritt von Ölaerosol zur Verschmutzung der Umgebung und steigert das Unfallrisiko, da der sich absetzende Flüssigkeitsnebel auf Oberflächen, wie etwa Fußböden, einen schmierigen Film bildet. Dieser Film kann sich auch auf den bearbeiteten Bauteilen bilden, die dadurch wieder verschmutzen können, was zu zusätzlichem Reinigungsaufwand führt.

Damit die Aerosolpartikel nicht unkontrolliert aus dem Bearbeitungsraum austreten und Menschen, Umwelt und Anlagen geschützt sind, werden die Bearbeitungsräume von Fertigungsmaschinen abgesaugt, wenn möglich evakuiert. Zum Abscheiden der Aerosolpartikel aus der abgesaugten Abluft dienen Aerosolabscheider. Diese Aerosolabscheider können einer Fertigungsmaschine zugeordnet sein oder die Abluft mehrerer Fertigungsmaschinen reinigen.

Ein derartiges Filtersystem ist auf der Internetseite von MANN+HUMMEL https://airfiltration.mann-hummel.com/our-solutions/oil-mist-filters/europe/ sowie in der auf dieser Internetseite herunterladbaren Broschüre "ScandMist Industrielle Emulsions- und Ölnebelabscheider" beschrieben. Dieser industrielle Emulsions- und Ölnebelabscheider entfernt Dämpfe, Emissionen und andere schädliche Nebenprodukte von metallverarbeitenden Verfahren mit Hilfe eines dreistufigen Filtrationsprozesses.

Des Weiteren sind Filtergeräte zum Reinigen der Abluft von Maschinen und Bearbeitungsprozessen unterschiedlicher Anwendungsbereiche auf der Internetseite https://absolent.com/ beschrieben.

Filterrahmen für die Luftfilterindustrie sind beispielsweise auf der Internetseite https://moeller-profilsysteme.de/produktvielfalt/filterrahmensysteme/ offenbart.

Das Dokument DE 19 70 842 U offenbart gewellte Separatoren aus Hartpapier für ein Filterelement, welches für die Abscheidung von Nebeln bzw. Aerosolen geeignet ist. Hartpapier ist ein Faserverbundwerkstoff aus der Gruppe der Hochdruck-Schichtpressstoffplatten, also ein homogenes und porenfreies Material mit der Rohdichte von mehr als 1,4 g/cm³ und einer glatten Oberfläche.

Des Weiteren ist aus der Druckschrift WO 2016/159848A1 ein mehrstufiger Aerosolabscheider zum Abscheiden von Öl und/oder Ölaerosol aus der Abluft von einer Fertigungsmaschine bekannt.

In der Druckschrift WO 2016/159848 A1 ist ein Aerosolabscheider gemäß dem Oberbegriff des Anspruchs 1 beschrieben. Dieser Aerosolabscheider dient zum Einsatz in ein Filtersystem zum Abscheiden von Ölnebel aus der Abluft, die bei der Metallbearbeitung in der Automobilindustrie anfällt, insbesondere bei MQL-Anwendungen (minimal quantitaty lubrication). Der Aerosolabscheider weist einen Koaleszenz-Filter mit einem gefalteten Filtermedium auf. Um ein Kollabieren der Falten des Koaleszenz-Filtermediums bei Druckdifferenzen zu verhindern, müssen diese Falten voneinander beabstandet werden. Das Beabstanden der Falten kann mittels in das Filtermedium eingeprägten Noppen erfolgen. Alternativ können die Falten mittels zwischen den Falten angeordneten Abstandshaltern oder Separatoren voneinander beabstandet werden. Diese Abstandshalter sind im Stand der Technik üblicherweise nach Art eines Aluminiumwellblechs ausgebildet. Der Rahmen des Abscheideelementes ist beim Stand der Technik üblicherweise aus Stahl, beispielsweise aus unlegiertem Baustahl der Güte S235, gebildet. Diese aus Metall gebildeten Elemente können jedoch bei der Entsorgung des Filterelements nicht thermisch verwertet werden. Somit müssen zur Entsorgung dieser Filterelemente die Abstandshalter sowie der Rahmen vom Filtermedium getrennt und gesondert entsorgt werden.

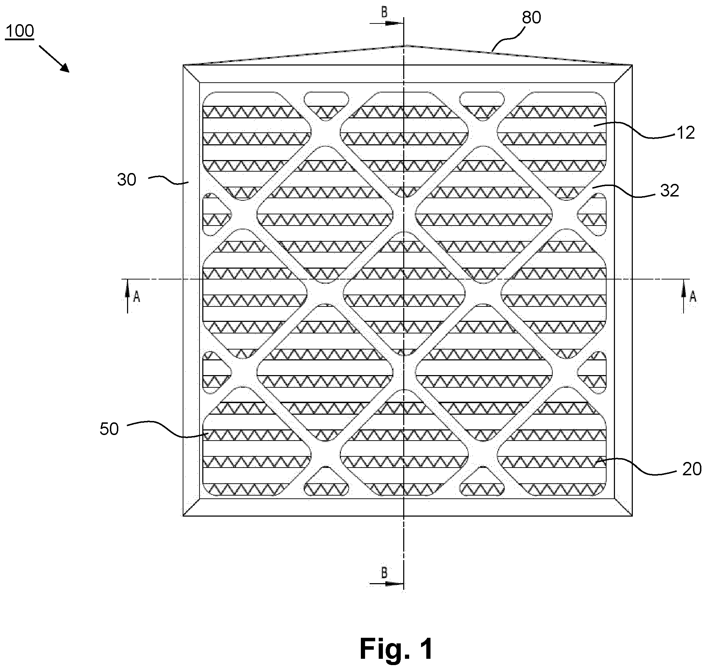

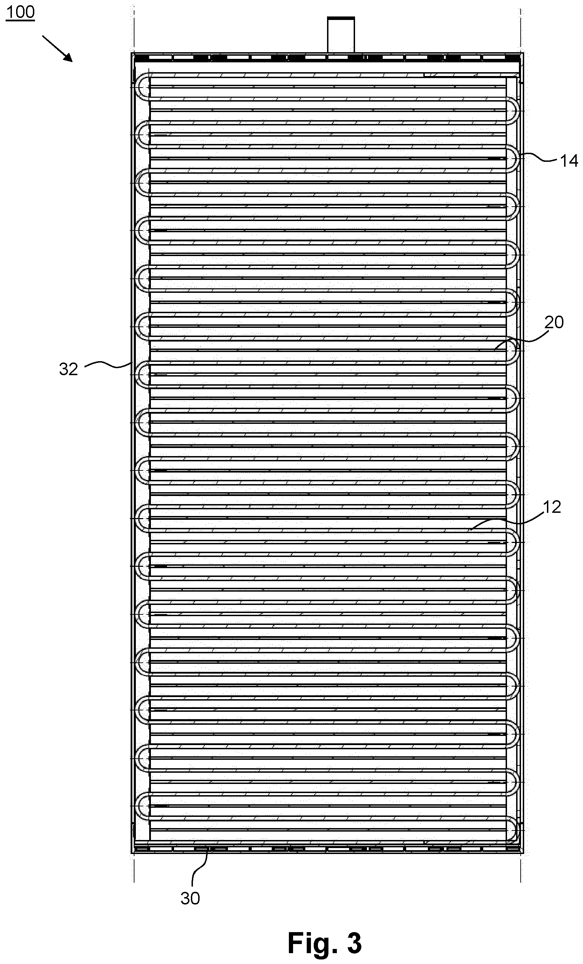

Das Dokument JP 2002 126432 A offenbart einen Filter mit Faltenbalg und umgebenden Rahmen. Zwischen den Falten sind wechselseitig Separatoren zur Beabstandung der Filterfalten angeordnet. Der Filter ist ausgelegt zur Abscheidung von Ölaerosolen aus einem Luftstrom, wobei die Separatoren zumindest einen porösen Teil aufweisen. Im Falle eines Glasfaserfiltermediums kann auch der poröse Bereich aus Glasfasermedium bestehen. Die Separatoren können ebenflächig (Figur 1) oder gewellt (Figur 3) sein. Zur Erhöhung der Formstabilität wird vorgeschlagen, den gewellten Abstandshalter auf einer Seite mit einer Metallfolie zu verstärken.

Der Erfindung liegt die Aufgabe zugrunde, ein Abscheideelement der eingangs genannten Art sowie ein Filtersystem der eingangs genannten Art derart weiterzuentwickeln, dass dieses besonders klimafreundlich, arbeitssicher und kostensparend ist. Vor allem soll das Abscheideelement umweltfreundlich und kostensparend entsorgt werden können.

### Offenbarung der Erfindung

Diese Aufgabe wird durch ein Abscheideelement mit den im Anspruch 1 angegebenen Merkmalen, durch ein Filtersystem mit den im Anspruch 8 angegebenen Merkmalen, sowie durch ein Verfahren mit den im Anspruch 9 angegebenen Merkmalen gelöst. Vorteilhafte Ausgestaltungen und zweckmäßige Weiterbildungen der vorliegenden Erfindung sind in den jeweiligen abhängigen Ansprüchen gekennzeichnet.

Mithin basiert die vorliegende Erfindung darauf, dass der Abstandshalter oder Separator mindestens ein poröses Material, nämlich ein Zellulosefiltermedium oder ein phenolharzimprägniertes zellulosefaserhaltiges Papier, aufweist, insbesondere zumindest im Wesentlichen aus porösem phenolharzimprägniertem Papier ist. Des Weiteren basiert die Erfindung darauf, dass das poröse Material räumlich oder plastisch geformt, insbesondere sinusartig gewellt oder zickzackförmig gefaltet, ist und sich flächig in der ihm zugeordneten Falte des Koaleszenz-Filtermediums erstreckt. Der Abstandshalter ist also ein poröses, flächiges Gebilde.

Der Abstandhalter ist dreidimensional geformt und erstreckt sich in die Länge, in die Breite und in die Höhe der Falte des Filter-Koaleszenzmediums. Dabei definiert die Höhe des Abstandshalters den Abstand der Längsflächen der Falte oder anders gesagt den Abstand der Faltenblätter zueinander. Eine beispielshafte Höhe des Abstandshalters beträgt etwa 5 mm bis 10 mm. Unabhängig hiervon oder in Ergänzung hierzu beträgt eine beispielhafte Dicke des Abstandshalters etwa 0,2 bis 0,5 mm. Vorteilhafterweise entsprechen die Länge und die Breite des Abstandshalters im Wesentlichen der Länge und der Breite der Filtermediumsfalten.

Gemäß einer bevorzugten Ausführungsform der vorliegenden Erfindung ist der Abstandshalter sinusartig gewellt oder zickzackförmig bzw. mäanderförmig gefaltet. Ein zickzackförmiges Falten des Abstandshalters erhöht dessen Formstabilität besonders. Dies ermöglicht es, den Abstandshalter aus relativ leichtem oder weichem Material zu fertigen, wobei dieser dennoch den im Betrieb des Filtersystems auftretenden Druckdifferenzen standhalten kann und formstabil bleibt. Zudem ist eine zickzackförmige Faltung bei zellulosefaserhaltigem Material, beispielsweise bei Papier, einfacher herstellbar als eine wellblechartige Form.

Die aus dem Stand der Technik bekannten Abstandshalter aus Aluminium sind nicht zickzackförmig geformt. Zickzackförmig geformte Aluminium-Abstandshalter sind scharfkantig und diese scharfen Kanten können beim Hineinschieben des Abstandshalters in die Falten das Koaleszenz-Filtermedium beschädigen.

Das poröse Material ist zellulosefaserhaltig, beispielsweise ein Zellulosefiltermedium, oder ein zellulosefaserhaltiges Papier, beispielsweise ein Glasfaserpapier, ein Filterpapier oder eine zellulosefaserhaltige Fiberglasmatte. Besonders bevorzugt ist das poröse Material des Abstandshalters ein Zellulosefiltermedium, also ein Papier, welches derart ausgebildet ist, dass der Abstandhalter auch im mit Öl beladenen Zustand noch formstabil ist. Die Formstabilität des Abstandshalters kann durch das Formen, insbesondere durch das zickzackförmige Falten, des Papiers erhöht werden. Ferner ist die Formstabilität des Abstandshalters unterstützt, indem der Abstandshalter neben dem porösen Material Phenolharz aufweist.

Ergänzend zu Papier kann das poröse Material Presspappe oder mitteldichte Holzfaserplatte (MDF) aufweisen. Ferner kann das zellulosefaserhaltige Material beispielsweise gepresste Fasermaterialien aus Holz und/oder aus Bambus und/oder aus Stroh und/oder aus Kokosnuss sein. Die vorgenannten pflanzenfaserhaltigen oder zellulosefaserhaltigen Materialien haben im Vergleich zu Aluminium, welches üblicherweise im Stand der Technik für die Abstandhalter eingesetzt wird, den Vorteil, dass sie voll veraschbar sind und zudem deutlich leichter sind als Aluminium. Dies vereinfacht die Entsorgung der Abstandshalter, erhöht die Ergonomie des Benutzers beim Wechsel des Abscheideelementes und reduziert die Abgasemissionen beim Transport des Abscheideelementes. Zudem haben die vorgenannten pflanzenfaserhaltigen oder zellulosefaserhaltigen Materialien im Vergleich zu Aluminium im gebogenen oder gefalteten Zustand keine scharfen Kanten, was die Arbeitssicherheit für den Benutzer des Abscheideelementes erhöht.

Überraschend wurde bei einem Abstandshalter aus einem phenolharzimprägnierten, zellulosefaserhaltigen Papier festgestellt, dass auch wenn der Abstandshalter selbst im Betrieb des Filtersystems nicht durchströmt wird, sondern die Strömung nur am Abstandshalter in den durch den Abstandshalter zwischen den Faltenspitzen und den Faltentäler gebildeten Kanälen vorbeifließt, sich dennoch ein Teil des Ölaerosols am Abstandshalter anlagert. Es fand also eine signifikante Partikelabscheidung an dem Abstandshalter statt, obwohl dieser nicht durchströmt wird. Ist der Abstandshalter aus porösem Material, insbesondere aus zellulosefaserhaltigem Material, beispielsweise aus harzimprägniertem Papier, wird also überraschenderweise die Sekundärfunktion des Abscheideelements, nämlich die Filtration der Partikel aus dem wiederaufzubereitenden Kühlschmierstoff, unterstützt. Diese Partikelabscheidung des Abstandshalters erhöht die Lebensdauer des Koaleszenz-Filtermediums und somit des Abscheideelementes.

Um den Abstandshalter beständig gegen Flüssigkeiten, insbesondere gegen Kühlschmierstoffe, auszubilden, ist das poröse Material des Abstandshalters mittels mindestens eines Kunst- und/oder Naturharzes, nämlich mittels Phenolharz, behandelt, beispielsweise imprägniert, beschichtet oder versiegelt. Eine Kunst- und/oder Naturharzbehandlung, beispielsweise -imprägnierung, bewirkt, dass der Abstandshalter seine mechanischen Stützeigenschaften behält, auch wenn dieser von der abgeschiedenen Flüssigkeit benetzt ist.

Beispielsweise kann für die Herstellung eines vorteilhaften Ausführungsbeispiels eines Abscheideelements der vorliegenden Erfindung
- Filterpapier durch eine Faltmaschine geführt und gefaltet werden,
- das gefaltete Filterpapier mittels Phenolharz imprägniert werden,
- oder alternativ zuerst das Filterpapier imprägniert und dann in einer Faltmaschine gefaltet werden,
- das gefaltete, imprägnierte Filterpapier im Ofen ausgehärtet werden,
- das ausgehärtete Filterpapier auf Länge zugeschnitten werden,
- das zugeschnittene gefaltete und imprägnierte Filterpapier als Abstandshalter in die jeweiligen Falten eines gefalteten Koaleszenz-Filtermediums, beispielsweise eines mehrfach gefalteten Glasfaserfiltermediums, eingebracht werden und
- das Koaleszenz-Filtermedium mit den integrierten Abstandshaltern in einen, insbesondere quaderförmigen, beispielsweise kastenförmigen oder kassettenartigen, Rahmen eingesetzt werden.

Dabei erhöht das Aushärten der Imprägnierung in einem Ofen die Formstabilität des Abstandshalters. Das ausgehärtete Harz macht also das Filterpapier in der gefalteten Gestalt formstabil und zwar auch dann, wenn das Filterpapier mit Öl getränkt ist.

Um eine möglichst umweltfreundliche sowie kostengünstige Entsorgung des Abscheideelementes zu ermöglichen, ist der Abstandshalter vorteilhafterweise aus metallfreiem, voll veraschbarem Material gebildet. Dies ermöglicht die Entsorgung des Abscheideelementes über thermisch verwertbaren Industrieabfall und eine Energierückgewinnung bei der Veraschung des Abscheideelementes bei seiner Entsorgung. Veraschbar bedeutet in diesem Zusammenhang, dass sich nach dem Verbrennen des Materials in der Asche nur noch ein für die thermische Verwertung akzeptabler Anteil an unverbrannten Teilen befindet.

Besonders bevorzugterweise ist das gesamte Abscheideelement aus metallfreiem, voll veraschbarem Material gebildet. Dabei kann beispielsweise das Koaleszenz-Filtermedium aus synthetischem Material, insbesondere aus Vlies, und/oder aus glasfaserhaltigem Material sein, beispielsweise kann das Koaleszenz-Filtermedium ein gefaltetes, mehrschichtiges Vliesmedium oder ein gefaltetes, mehrschichtiges Glasfasermedium oder eine Kombination aus synthetischem Medium und Gasfasermedium sein.

Unabhängig hiervon oder in Verbindung hiermit kann der Rahmen beispielsweise aus Kunststoff, insbesondere aus Polystyrol, sein. Alternativ zu Kunststoff kann der Rahmen auch aus Holz, aus Presspappe, aus mitteldichtem Holzfaserplattenmaterial (MDF), oder aus gepresstem Fasermaterial aus Bambus und/oder Stroh und/oder Kokosnuss, welches zum Beispiel mit Wachs beschichtet oder versiegelt ist, sein. Wenn das gesamte Abscheideelement aus veraschbarem Material gebildet ist, ist zur Entsorgung keine Trennung von Filtermedium und Abstandshaltern sowie Filterrahmen erforderlich. Neben der Veraschbarkeit haben die vorgenannten Rahmenmaterialien im Vergleich zu Metall, welches üblicherweise im Stand der Technik eingesetzt wird, den Vorteil, dass sie deutlich leichter sind. Dies erhöht die Ergonomie des Benutzers beim Wechsel des Abscheideelementes und reduziert Abgasemissionen beim Transport des Abscheideelementes.

Die vorliegende Erfindung betrifft ferner die Verwendung mindestens eines räumlich geformten Elements aus porösem Material, insbesondere mindestens eines wellenartig oder zickzackförmig oder mäanderförmig gefalteten Filterpapiers, als Abstandshalter in den Falten eines mehrfach gefalteten Koaleszenz-Filtermediums, insbesondere eines Glasfaserkoaleszenz-Filtermediums. Das räumlich geformte Element ist mittels Phenolharz imprägniert und gehärtet.

Die vorliegende Erfindung betrifft schließlich die Verwendung eines Abscheideelements gemäß der vorstehend dargelegten Art und/oder eines nach dem Verfahren der vorstehend dargelegten Art hergestellten Abscheideelements in einem Filtersystem der vorstehend dargelegten Art, zum Abscheiden von Öl und/oder Ölaerosol aus der Abluft mindestens einer Fertigungsmaschine, insbesondere einer zerspanenden Fertigungsmaschine.

### Kurze Beschreibung der Zeichnungen

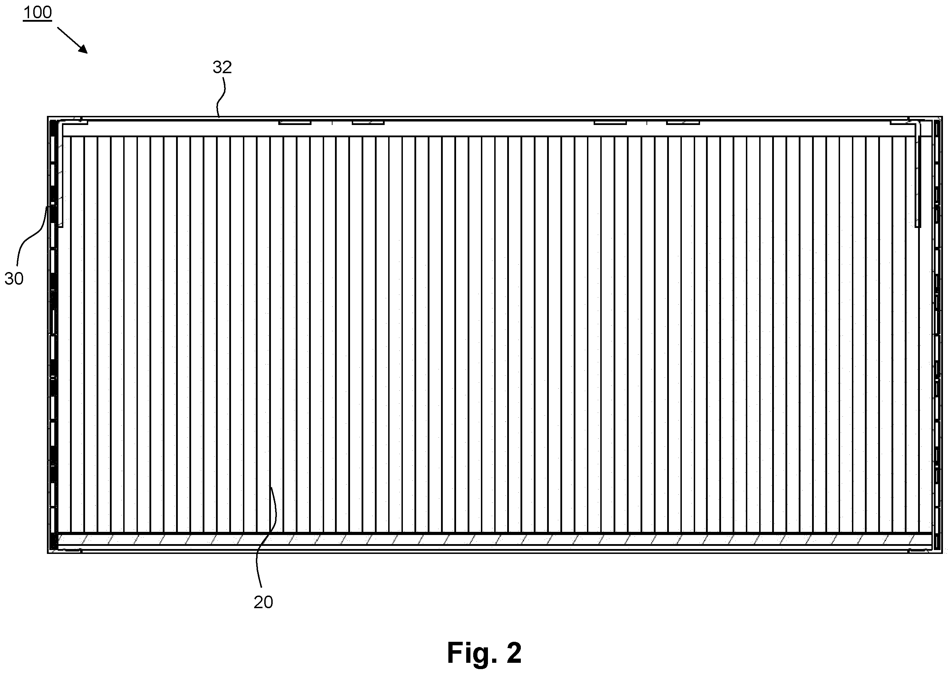

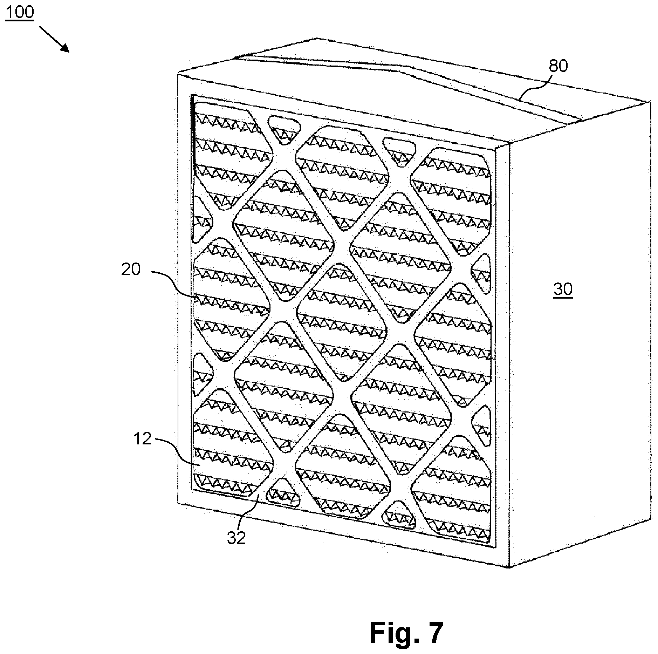

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 sowie dem Anspruch 9 nachgeordneten Ansprüche verwiesen, andererseits werden weitere Ausgestaltungen, Merkmale und Vorteile der vorliegenden Erfindung nachstehend unter anderem anhand der durch die Figuren 1 bis 10 veranschaulichten Ausführungsbeispiele näher erläutert.

Es zeigt:
Fig. 1 ein Ausführungsbeispiel eines Abscheideelements gemäß der vorliegenden Erfindung, das nach dem Verfahren gemäß der vorliegenden Erfindung hergestellt ist;
Fig. 2 eine Schnittansicht des Abscheideelements entlang der in Figur 1 gezeigten Linie A-A;
Fig. 3 eine Schnittansicht des Abscheideelements entlang der in Figur 1 gezeigten Linie B-B;
Fig. 4 eine Detailansicht des Koaleszenz-Filtermediums des Abscheideelements aus Figur 1;
Fig. 5 eine Aufsicht von schräg oben auf das Koaleszenz-Filtermedium des Abscheideelements aus Figur 1 ;
Fig. 6 eine Detailansicht des Abstandshalters des Koaleszenz-Filtermediums des Abscheideelements aus Figur 1 ;
Fig. 7 eine isometrische Ansicht des Abscheideelements aus Figur 1 ;
Fig. 8 ein erstes Ausführungsbeispiel für ein Filtersystem gemäß der vorliegenden Erfindung;
Fig. 9 in Querschnittdarstellung das Filtersystem aus Figur 8; und
Fig. 10 in schematischer Darstellung ein zweites Ausführungsbeispiel für ein Filtersystem gemäß der vorliegenden Erfindung.

Gleiche oder ähnliche Ausgestaltungen, Elemente oder Merkmale sind in den Figuren 1 bis 10 mit identischen Bezugszeichen versehen.

### Ausführungsform(en) der Erfindung

Figur 1 zeigt die Vorderseite eines Ausführungsbeispiels eines Abscheideelements 100 gemäß der vorliegenden Erfindung, das nach dem Verfahren gemäß der vorliegenden Erfindung hergestellt ist. Dabei schaut man in Figur 1 in Strömungsrichtung des Rohgases auf das Abscheideelement 100.

Das kastenförmige Abscheideelement 100 dient zum Abscheiden von Ölaerosolpartikeln aus Rohgas, nämlich von öl- und/oder emulsionsbasierten Kühlschmiermittelaerosolpartikeln aus der Abluft mindestens einer Fertigungsmaschine oder Bearbeitungsmaschine, wobei die Abluft zum Beispiel beim Bohren, Drehen, Fräsen oder Schleifen, entsteht.

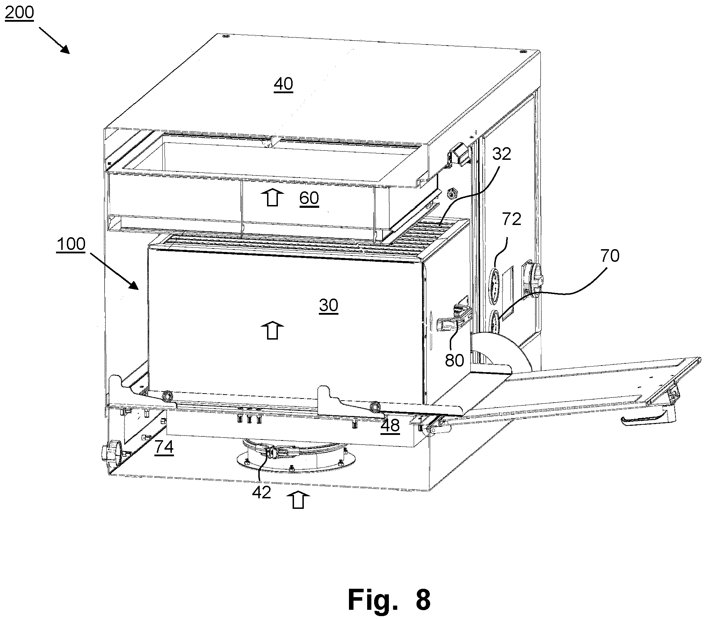

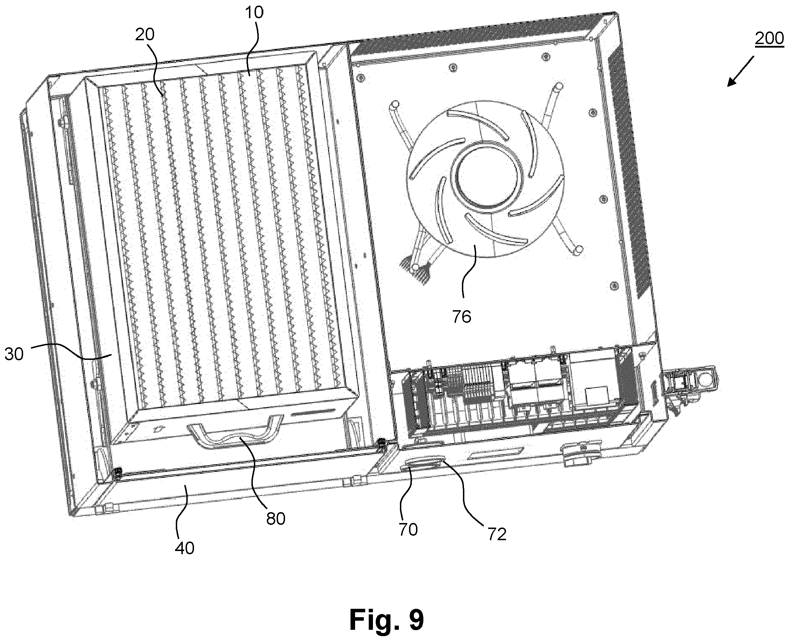

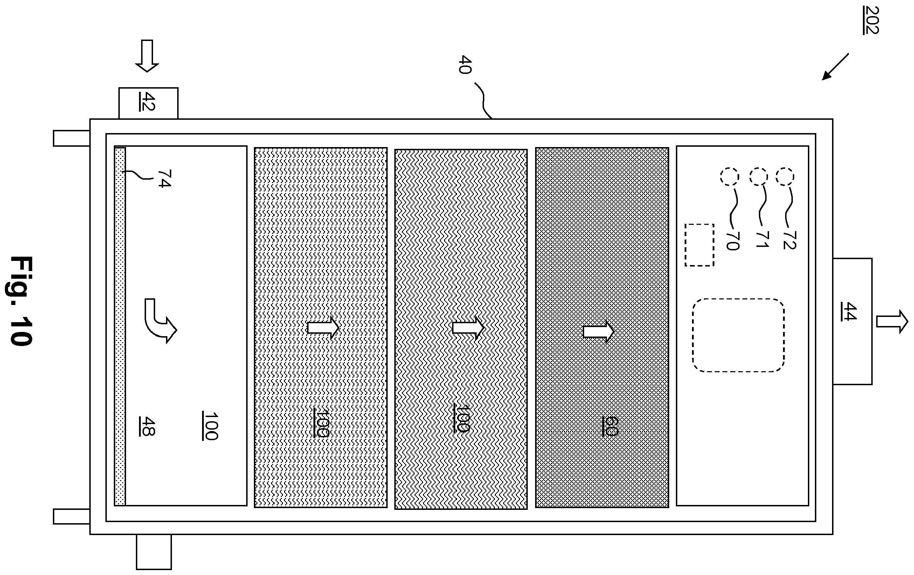

In den Figuren 8 und 9 ist ein erstes Ausführungsbeispiel für ein Filtersystem 200 nach der vorliegenden Erfindung gezeigt, wobei dieses Filtersystem 200 ein Abscheideelement 100 aufweist und dazu ausgebildet ist, einer Fertigungsmaschine zugeordnet zu werden. Der Volumenstrom, welcher das in den Figuren 8 und 9 gezeigte Filtersystem 200 durchläuft, umfasst etwa 700 Kubikmeter Luft pro Stunde. Es ist aber auch möglich, das Filtersystem derart auszubilden, dass es von einem geringeren oder einem größeren Gasvolumenstrom durchströmbar ist. Das in Figur 10 dargestellte Filtersystem 202 ist dazu ausgelegt, die Raumluft einer ganzen Fertigungshalle, also die Abluft mehrerer Fertigungsmaschinen, zu reinigen. Dieses Filtersystem 202 weist mehrere Abscheideelemente 100 auf, welche in regalartigen Schubladenfächern in Strömungsrichtung aufeinander folgend übereinander angeordnet sind. Zur Vermeidung überflüssiger Wiederholungen beziehen sich die nachfolgenden Erläuterungen hinsichtlich der Ausgestaltungen, Merkmale und Vorteile der vorliegenden Erfindung (soweit nicht anderweitig angegeben) sowohl auf das in Figur 8 dargestellte Filtersystem 200 als auch auf das in Figur 10 dargestellte Filtersystem 202.

Das mit Aerosolpartikeln beladene Rohgas wird aus dem Bearbeitungsraum der Fertigungsmaschine von einem Ventilator 74, abgesaugt und strömt über einen Rohgaseinlass 42 in das Gehäuse 40 des Filtersystems 200; 202 ein. Die Strömungsrichtung im Filtersystem 200; 202 ist in den Figuren 8 und 10 mittels Blockpfeilen dargestellt.

Im Filtersystem 200; 202 kann das Rohgas durch unterschiedliche Filtermedien geführt werden, beispielsweise durch
- ein, etwa als Drahtgestrick ausgebildetes, Vorabscheiderelement 48 zum Abscheiden grober Schmutzpartikel,
- mindestens ein nach dem Koaleszenz-Prinzip arbeitendes Abscheideelement 100 mit einem Koaleszenz-Filtermedium 10 zum Abscheiden von Ölaerosolpartikeln aus Luft und
- ein Nachabscheiderelement 60, insbesondere einen Feinfilter oder Schwebstofffilter, beispielsweises einen Feinfilter der Filterklasse H13 (HEPA) nach DIN-EN 1822, zum Abscheiden von feinsten Partikeln wie Rauch, Viren, Bakterien, Pollen und Sporen aus dem Rohgas.

Die Feinheit der Filtermedien im Filtersystem 200; 202 nimmt in Strömungsrichtung immer weiter zu, sodass zunächst gröbere, dann feine und anschließend sehr feine Partikel aus der Abluft abgetrennt werden.

Die Hauptfunktion des Abscheideelements 100 ist die Aerosolabscheidung. Abgeschiedene Flüssigkeit, die nach dem Koaleszenz-Prinzip im Koaleszenz-Filtermedium aus feinen Aerosolpartikeln zu größeren Tropfen anwächst und der Schwerkraft folgend nach unten abtropft, wird gesammelt und wieder den Vorräten für die Kühlschmierstoffe zugeführt. In einem der Schwerkraft folgenden unteren Bereich des Gehäuses 40 ist ein zum Sammeln der abgeschiedenen Flüssigkeit ausgebildetes Sammelvolumen 74 angeordnet. Von dort kann die abgeschiedene Flüssigkeit abgepumpt oder mittels mindestens eines Absperrhahns abgeleitet werden.

Eine Nebenfunktion oder Sekundärfunktion des Abscheideelements 100 ist die Partikelabscheidung, wobei Feststoffpartikel, welche in den Kühlschmierstoffen enthalten sind, abgeschieden werden. Im gereinigten Zustand verlässt das Rohgas das Gehäuse 40 über mindestens einen Reingasauslass 44 und wird zurück in den Raum oder nach Außen in die Umgebung geführt.

Zum Abscheiden der Aerosolpartikel weist das Abscheideelement 100 ein flaches, mehrfach gefaltetes Koaleszenz-Filtermedium 10 auf. Dabei bildet jeweils eine Seite der Faltenkanten die Rohseite und die andere Seite der Faltenkanten die Reinseite. Mit anderen Worten bildet jeweils eine Längsfläche der Filermediumsfalten die Rohseite der Falte und die andere Längsfläche der Filermediumsfalten die Reinseite der Falte. Die Falten des Koaleszenz-Filtermediums 10 sind also in Gebrauchsstellung liegend oder flach angeordnet. Somit sind die Falten im Wesentlichen senkrecht zur Durchströmrichtung angeordnet und werden beim Betrieb des Abscheideelements 100 entgegen der Schwehrkraftrichtung von unten nach oben durchströmt.

Ein, beispielsweise als Vorfilter ausgebildetes, Abscheideelement 100 kann als Koaleszenz-Filtermedium 10 ein gefaltetes synthetisches Filtermedium, beispielsweise gefaltetes Polyestervlies aufweisen. Ein, beispielsweise als Hauptabscheider ausgebildetes, Abscheideelement 100 kann als Koaleszenz-Filtermedium 10 beispielsweise ein gefaltetes Glasfasermedium, etwa gefaltetes Glasfaserpapier, aufweisen. Des weiteren kann das Abscheideelement 100 als Koaleszenz-Filtermedium 10 eine Kombination aus synthetischem Filtermedium und Glasfasermedium aufweisen.

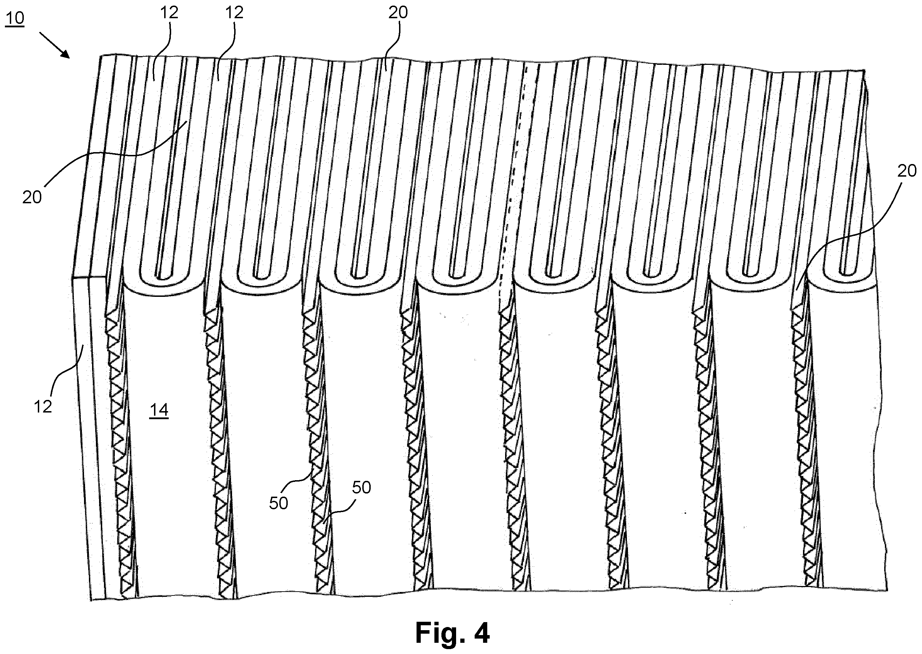

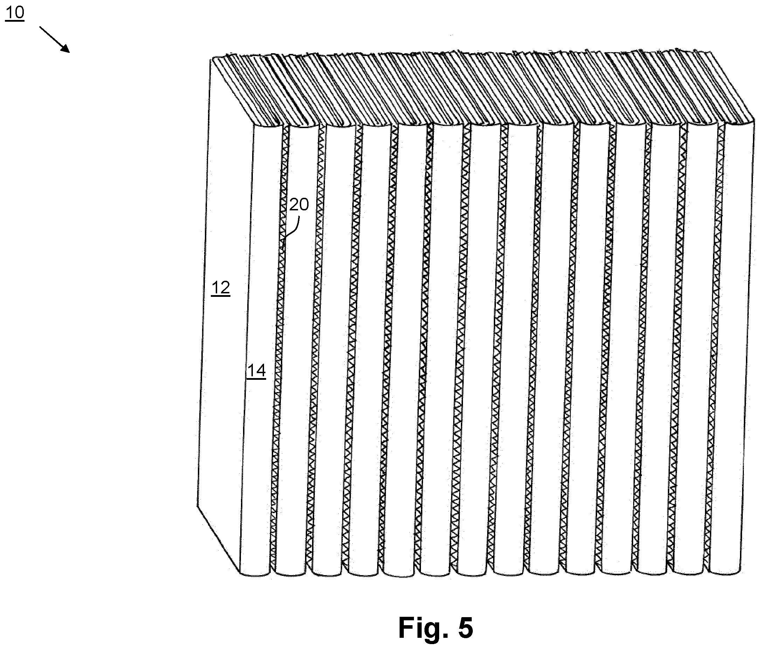

Um ein Kollabieren der Falten des Koaleszenz-Filtermediums 10 im Betrieb des Abscheideelementes 100 zu verhindern, werden die Falten jeweils mittels Abstandshaltern 20 voneinander beabstandet. Die Abstandshalter 20 dienen dabei zum Abstützen der Längsflächen oder der Blätter der Falten des Koaleszenz-Filtermediums 10. Jeder Abstandshalter 20 erstreckt sich jeweils derart flächig zwischen den Längsflächen der ihm zugeordneten Filermediumsfalte, dass zwischen der Faltenspitze und dem Faltental dieser Filermediumsfalte mindestens ein vom Rohgas durchströmbarer Kanal 50 breitgestellt wird. Beispielsweise aus den Figuren 1, 4, 5 und 7 ist ersichtlich, dass bei einem zickzackförmig gefalteten Abstandhalter 20 der Kanal 50 jeweils an zwei Seiten vom Abstandhalter 20 und an einer Seite vom Koaleszenz-Filtermedium 10 begrenzt ist. Eine Detailansicht des Koaleszenz-Filtermediums 10 mit integrierten Abstandshaltern 20 ist in den Figuren 4 und 5 dargestellt. Das Koaleszenz-Filtermedium 10 ist zweilagig ausgebildet, je Faltenlängsfläche 12 weist das Koaleszenz-Filtermedium 10 also zwei Lagen auf. Der Abstandshalter 20 ist ein poröses flächiges Gebilde, das mit Harz imprägniert ist. Im Detail ist der Abstandshalter ein zickzackförmig gefaltetes, harzimprägniertes Filterpapier.

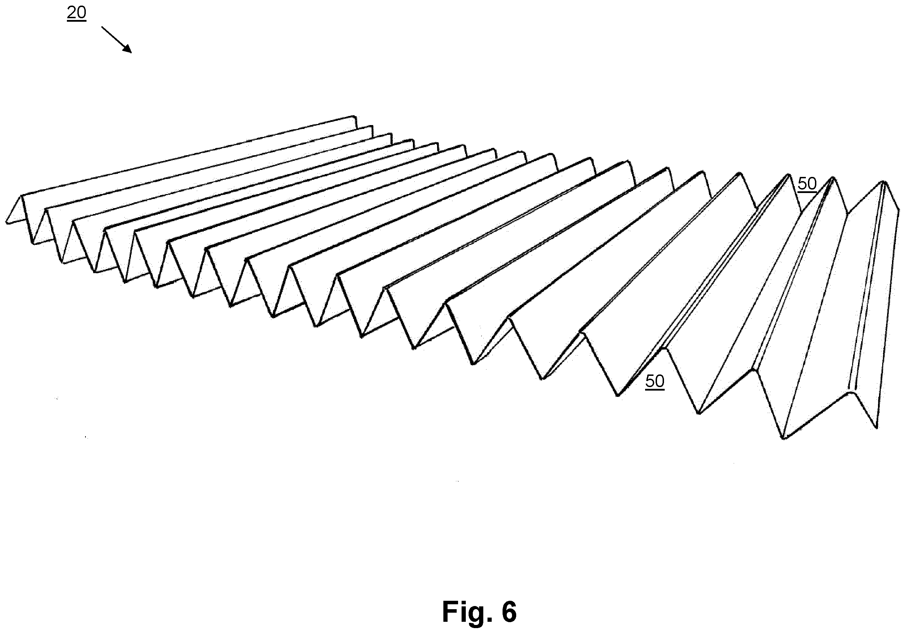

Figur 6 zeigt eine Detailansicht des Abstandshalters 20. Dieser Abstandshalter 20 ist aus einem zickzackförmig gefalteten porösem Material das voll veraschbar ist. Um das poröse Material des Abstandshalters 20 resistent gegen Öl sowie gegen Kühlschmiermittel auszubilden, weist dieses eine Harzbeschichtung oder eine Harzimprägnierung auf.

Das poröse Material des Abstandshalters 20 kann beispielsweise ein Zellulosefiltermedium, insbesondere ein gewachstes und gehärtetes Papier nach DIN EN ISO 536 oder nach DIN EN 29073 sein, dessen Flächenmasse 200 Gramm pro Quadratmeter beträgt. Die Dicke des Papiers wird so gewählt, dass die Abstandshalter 20 möglichst leicht sind, aber dennoch eine gewisse Eigenstabilität aufweisen. Die Zackenhöhe des Abstandshalters 20 kann beispielsweise 5 bis 10 mm betragen. Die Zacken bilden Kanäle, welche in Durchströmungsrichtung liegen, so dass nebeneinanderliegende v-förmige Kanäle von der Rohseite zur Reinseite bereitgestellt werden, welche jeweils eine Falte des Koaleszenz-Filtermediums 1 umgeben.

Das Koaleszenz-Filtermedium 10 ist, wie in den Figuren 1 und 7 bis 9 gezeigt, in einen quaderförmigen, insbesondere kastenförmigen oder kassettenartigen, Rahmen 30 eingesetzt. Dieser Rahmen 30 dient der Handhabung des Abscheideelementes 100, beispielsweise beim Einsetzen in das Filtersystem 200; 202. Zudem stützt der Rahmen 30 das Koaleszenz-Filtermedium 10 und verhindert, dass dieses aufgrund des Gewichts durch die Ölabsorption während dem Betrieb des Koaleszenz-Filtermedium 10 auseinanderfällt.

Ein jeweiliges Abscheideelement 100 kann beispielsweise eine Dimension von 60 cm × 60 cm × 40 cm bis 100 cm × 100 cm × 70 cm aufweisen. Im mit Öl beladenen Zustand können diese kastenförmigen Filtereelemente etwa 40 kg bis 50 kg wiegen. Das in Figur 10 dargestellte Filtersystem 202 kann mannshoch oder sogar höher sein.

Der Verschmutzungsgrad der jeweiligen Filterelemente des Filtersystems 200;202 ist mittels Differenzdruckanzeigen 70, 71, 72 bestimmbar. Bei einem definierten Druckverlust sollte das entsprechende Filterelement, beispielsweise das entsprechende Abscheideelement 100, gewechselt werden.

Damit das Abscheideelement 100 kostensparend mittels thermischer Verwertung entsorgbar ist, sind vorteilhafterweise neben dem Abstandshalter 20 auch die weiteren Komponenten des Abscheideelementes 100 aus veraschbarem Material. So können die Filterkassette des Abscheideelements 100, also der Rahmen 30 sowie optional ein Einlass- und/oder Auslassseitiges, zum Stützen des Koaleszenz-Filtermediums ausgebildetes Stützgitter 32 des Rahmens, aus Kunststoff gefertigt sein.

Im Vergleich zu einem aus dem Stand der Technik bekannten Abscheideelement mit Aluminiumseparatoren und Metallrahmen, welche oft verzinkt sind, hat das in den Figuren 1 und 7 bis 10 gezeigte Abscheideelement 100 mit Abstandshaltern aus Zellulosefiltermedium und Kunststoffrahmen ein deutlich, etwa um 7 Kilogramm, geringeres Gewicht. Dies erhöht die Ergonomie für den Benutzer des Abscheideelements 100 und ermöglicht es, dass das Abscheideelement 100 unter Einhaltung der Arbeitssicherheitsauflagen von nur einer Person gehalten werden kann. Zudem reduziert das im Vergleich zum Stand der Technik signifikant geringere Gewicht die Transportkosten sowie Abgasemissionen beim Transport des Abscheideelements 100. Somit hat dieses Abscheideelement 100 einen deutlich kleineren Kohlenstoffdioxid-Fußabdruck im Vergleich zu herkömmlichen Abscheideelementen.

### Bezugszeichenliste

- 10: nach dem Koaleszenz-Prinzip arbeitendes, gefaltetes Filtermedium, beispielsweise gefaltetes, mehrschichtiges Glasfasermedium, zum Abscheiden von Ölaerosolpartikeln aus Rohgas, insbesondere von öl- oder emulsionsbasierten Kühlschmiermittelaerosolpartikeln aus Rohluft, etwa von Kühlschmierstoffaerosolpartikeln und/oder von Trennmittelaerosolpartikeln aus der Abluft mindestens einer Fertigungsmaschine
- 12: Längsfläche oder Blatt einer Falte des Koaleszenz-Filtermediums 10
- 14: Kante einer Falte des Koaleszenz-Filtermediums 10
- 20: Abstandshalter oder Separator oder Spacer aus porösem Material zum Abstützen der Längsflächen 12 oder der Blätter der Falten
- 30: zur Aufnahme des Koaleszenz-Filtermediums 10 ausgebildeter, insbesondere quaderförmiger, Rahmen des Abscheideelements 100
- 32: Einlass- bzw. Auslassseitiges Stützgitter des Rahmens, insbesondere Anssauggitter oder Auslassgitter des Rahmens 30
- 40: schrankartiges oder regalartiges Gehäuse des Filtersystems 200; 202
- 42: Rohgaseinlass
- 44: Rohgasauslass
- 48: Vorabscheiderelement zum Abscheiden grober Schmutzpartikel
- 50: Kanal innerhalb der Falten des Koaleszenz-Filtermediums 10
- 60: Nachabscheiderelement
- 70: Differenzdruckanzeige, insbesondere dem ersten Abscheideelement 100 zugeordnete Differenzdruckanzeige
- 71: weitere Differenzdruckanzeige, insbesondere dem weiteren Abscheideelement 100 zugeordnete Differenzdruckanzeige
- 72: weitere Differenzdruckanzeige, insbesondere dem Nachabscheiderelement 60 zugeordnete Differenzdruckanzeige
- 74: Sammelvolumen zur Aufnahme abgeschiedener Flüssigkeit
- 76: Ventilator
- 80: Griffelement des Abscheideelements 100
- 100: Abscheideelement, insbesondere Filterkassette, beispielsweiseTröpfchenabscheiderelement oder Koaleszenz-Filterelement
- 200: Filtersystem oder Abscheider zum Abscheiden von Öl und/oder Ölaerosol aus der Abluft mindestens einer Fertigungsmaschine insbesondere einer zerspanenden Fertigungsmaschine (erstes Ausführungsbeispiel, vgl. Figuren 8 und 9)
- 202: Filtersystem oder Abscheider zum Abscheiden von Öl und/oder Ölaerosol aus der Abluft mindestens einer Fertigungsmaschine insbesondere einer zerspanenden Fertigungsmaschine (zweites Ausführungsbeispiel, vgl. Figur 10)

## Patentansprüche

1. Abscheideelement (100) zum Abscheiden von Ölaerosolpartikeln aus Rohgas, wobei das Abscheideelement (100)
- mindestens ein mehrfach, insbesondere zickzackförmig, gefaltetes Koaleszenz-Filtermedium (10),
- mindestens einen Abstandshalter (20), der jeweils einer Falte des Koaleszenz-Filtermediums (10) zugeordnet ist und zum Beabstanden der jeweiligen Längsflächen (12) dieser Falte ausgebildet ist, und
- mindestens einen Rahmen (30) zur Aufnahme des Koaleszenz-Filtermediums (10) mit den in die Falten des Koaleszenz-Filtermediums (10) integrierten Abstandshaltern (20),
aufweist, wobei
- jeweils eine Längsfläche (12) der Filtermediumsfalten die Rohseite der Filtermediumsfalten bildet und die andere Längsfläche (12) der Filtermediumsfalten die Reinseite der Filtermediumsfalten bildet,
**dadurch gekennzeichnet, dass**
- der Abstandshalter (20) mindestens ein poröses Material, nämlich ein phenolharzimprägniertes, zellulosefaserhaltiges Papier, aufweist,
- das poröse Material des Abstandshalters (20) räumlich geformt ist und
- das poröse Material des Abstandshalters (20) sich jeweils derart flächig zwischen den Längsflächen (12) der ihm zugeordneten Filtermediumsfalte erstreckt, dass zwischen der Faltenspitze und dem Faltental dieser Filtermediumsfalte mindestens ein vom Rohgas durchströmbarer Kanal (50) bereitgestellt wird.

2. Abscheideelement nach Anspruch 1, **dadurch gekennzeichnet, dass** das zellulosefaserhaltige Papier ein Glasfaserpapier, ein Filterpapier oder eine Fiberglasmatte ist.

3. Abscheideelement nach Anspruch 1 oder 2, **dadurch gekennzeichnet, dass** der Abstandshalter (20) sinusförmig gewellt oder zickzackförmig gefaltet ist.

4. Abscheideelement nach mindestens einem der Ansprüche 1 bis 3, **dadurch gekennzeichnet, dass** die Länge und die Breite des Abstandshalters (20) im Wesentlichen der Länge und der Breite der Filtermediumsfalten entsprechen.

5. Abscheideelement nach mindestens einem der Ansprüche 1 bis 4, **dadurch gekennzeichnet, dass** der Abstandshalter (20) aus veraschbarem Material gebildet ist.

6. Abscheideelement nach mindestens einem der Ansprüche 1 bis 5, **dadurch gekennzeichnet, dass** das Abscheideelement (100) aus veraschbarem Material gebildet ist.

7. Abscheideelement nach Anspruch 6, **dadurch gekennzeichnet, dass**
- das Koaleszenz-Filtermedium (10) aus synthetischem Material, insbesondere aus Vlies, und/oder aus glasfaserhaltigem Material ist, und
- der Rahmen (30) aus Kunststoff, insbesondere aus Polystyrol, ist.

8. Filtersystem (200; 202) zur Abscheidung von Ölaerosolpartikeln aus Rohgas, insbesondere von öl- und/oder emulsionsbasierten Kühlschmiermittelaerosolpartikeln aus der Abluft mindestens einer Fertigungsmaschine, aufweisend
- ein Gehäuse (40) mit einem Rohgaseinlass (42) zum Einlassen von mit Ölaerosolpartikeln beladenem Rohgas und einem Reingasauslass (44) zum Auslassen von durch das Filtersystem (200) gereinigtes Reingas, und
- mindestens ein im Strömungsweg zwischen dem Rohgaseinlass (42) und dem Reingasauslass (44) angeordnetes Abscheideelement (100) nach mindestens einem der Ansprüche 1 bis 7.

9. Verfahren zur Herstellung eines Abscheideelements (100) zum Abscheiden von Ölaerosolpartikeln aus Rohgas, insbesondere von öl- und/oder emulsionsbasierten Kühlschmiermittelaerosolpartikeln aus der Abluft mindestens einer Fertigungsmaschine, **dadurch gekennzeichnet, dass**
i) mindestens ein flächiges Element aus porösem, phenolharzimprägniertem Papier räumlich geformt wird,
ii) das räumlich geformte, poröse, phenolharzimprägnierte Papier jeweils in den Falten eines mehrfach gefalteten Koaleszenz-Filtermediums derart flächig angeordnet wird, dass es als Abstandshalter (20) für die jeweiligen Längsflächen der Falten dient und zwischen den Faltenspitzen und den Faltentälern der Falten jeweils mindestens einen vom Rohgas durchströmbaren Kanal (50) bereitstellt, und
iii) das Koaleszenz-Filtermedium (10) mit den in die Falten integrierten Abstandshaltern (20) in einen Rahmen (30) eingesetzt wird.

10. Verfahren nach Anspruch 9, **dadurch gekennzeichnet, dass** das flächige Element im Schritt i) sinusartig gewellt oder zickzackförmig gefaltet wird.

11. Verfahren nach Anspruch 9 oder 10, **dadurch gekennzeichnet, dass** der räumlich geformte sowie mit Phenolharz imprägnierte Abstandshalter (20) im Ofen ausgehärtet wird.

12. Verwendung eines nach mindestens einem der Ansprüche 1 bis 7 ausgebildeten Abscheideelements (100) und/oder eines nach dem Verfahren mindestens eines der Ansprüche 9 bis 11 hergestellten Abscheideelements (100) in einem nach Anspruch 8 ausgebildeten Filtersystem (200; 202), zum Abscheiden von Öl und/oder Ölaerosol aus der Abluft mindestens einer Fertigungsmaschine, insbesondere einer zerspanenden Fertigungsmaschine.

## Claims

1. A separating element (100) for separating oil aerosol particles from raw gas, wherein the separating element (100) features
- at least one coalescence filter medium (10) folded several times, in particular zigzag-folded,
- at least one spacer (20) associated with a respective fold of the coalescence filter medium (10) and designed for spacing the respective longitudinal surfaces (12) of said fold, and
- at least one frame (30) for accommodating the coalescence filter medium (10) with the spacers (20) integrated in the folds of the coalescence filter medium (10),
wherein
- respectively, one longitudinal surface (12) of the filter medium folds forms the raw side of the filter medium folds and the other longitudinal surface (12) of the filter medium folds forms the clean side of the filter medium folds,
**characterized in that**
- the spacer (20) comprises at least one porous material, namely a phenolic resin-impregnated paper containing cellulose fibers,
- the porous material of the spacer (20) is spatially shaped and
- the porous material of the spacer (20) extends respectively over a flat area in such a way between the longitudinal surfaces (12) of the filter medium fold allocated to it that at least one channel (50) through which the raw gas can flow is provided between the fold tip and the fold valley of this filter medium fold.

2. The separating element according to claim 1, **characterized in that** the paper containing cellulose fiber is a glass fiber paper, a filter paper or a fiber glass mat.

3. The separating element according to claim 1 or 2, **characterized in that** the spacer (20) is sinusoidally corrugated or zigzag-folded.

4. The separating element according to at least one of the claims 1 to 3, **characterized in that** the length and the width of the spacer (20) correspond substantially to the length and the width of the filter medium folds.

5. The separating element according to at least one of the claims 1 to 4, **characterized in that** the spacer (20) is made of an incinerable material.

6. The separating element according to at least one of the claims 1 to 5, **characterized in that** the separating element (100) is made of an incinerable material.

7. The separating element according to claim 6, **characterized in that**
- the coalescence filter medium (10) is made of synthetic material, in particular of non-woven fabric, and/or of material containing glass fibers, and
- the frame (30) is made of plastic material, in particular polystyrene.

8. A filter system (200; 202) for separating oil aerosol particles from raw gas, in particular oil- and/or emulsion-based cooling lubricant aerosol particles from the exhaust air of at least one manufacturing machine, featuring
- a housing (40) having a raw gas inlet (42) for admitting raw gas loaded with oil aerosol particles and a clean gas outlet (44) for discharging clean gas purified through the filter system (200), and
- at least one separating element (100) according to at least one of the claims 1 to 7 disposed in the flow path between the raw gas inlet (42) and the clean gas outlet (44).

9. A method for manufacturing a separating element (100) for separating oil aerosol particles from raw gas, in particular oil- and/or emulsion-based cooling lubricant aerosol particles from the exhaust air of at least one manufacturing machine, **characterized in that**
i) at least one flat element made of porous, phenolic resin-impregnated paper is spatially shaped,
ii) the spatially shaped, porous, phenolic resin-impregnated paper is flatly applied in each of the folds of a multi-folded coalescence filter medium in such a way that it serves as a spacer (20) for the respective longitudinal surfaces of the folds and provides between the fold tips and the fold valleys of the folds respectively at least one channel (50) through which the raw gas can pass, and
iii) the coalescence filter medium (10) with the spacers (20) integrated in the folds is inserted into a frame (30).

10. The method according to claim 9, **characterized in that** the flat element is sinusoidally corrugated or zigzag-folded in step i).

11. The method according to claim 9 or 10, **characterized in that** the spatially shaped spacer (20) impregnated with phenolic resin is cured in the oven.

12. A use of a separating element (100) designed according to at least one of the claims 1 to 7 and/or of a separating element (100) manufactured according to the method of at least one of the claims 9 to 11 in a filter system (200; 202) designed according to claim 8, for separating oil and/or oil aerosol from the exhaust air of at least one manufacturing machine, in particular a cutting manufacturing machine.

## Revendications

1. Élément de séparation (100) destiné à séparer des particules d'aérosols d'huile de gaz brut, l'élément de séparation (100) présentant
- au moins un milieu filtrant de coalescence (10) plié à plusieurs reprises, notamment plié en accordéon,
- au moins un élément d'espacement (20), qui est associé respectivement à un pli du milieu filtrant de coalescence (10) et qui est conçu pour espacer les surfaces longitudinales respectives (12) de ce pli, et
- au moins un cadre (30) destiné à recevoir le milieu filtrant de coalescence (10) avec les éléments d'espacement (20) intégrés dans les plis du milieu filtrant de coalescence (10),
dans lequel
- respectivement une surface longitudinale (12) des plis du milieu filtrant forme le côté brut des plis du milieu filtrant et l'autre surface longitudinale (12) des plis du milieu filtrant forme le côté pur des plis du milieu filtrant,
**caractérisé en ce que**
- l'élément d'espacement (20) présente au moins un matériau poreux, plus précisément un papier imprégné de résine phénolique et contenant des fibres de cellulose,
- le matériau poreux de l'élément d'espacement (20) est formé spatialement et
- le matériau poreux de l'élément d'espacement (20) s'étend respectivement de manière plane entre les surfaces longitudinales (12) du pli du milieu filtrant qui lui est assigné, de sorte qu'au moins un conduit (50) pouvant être traversé par le gaz brut est mis à disposition entre la crête de plis et le creux de ce pli du milieu filtrant.

2. Élément de séparation selon la revendication 1, **caractérisé en ce que** le papier contenant des fibres de cellulose est un papier à fibres de verre, un papier filtre ou un mat en fibres de verre.

3. Élément de séparation selon la revendication 1 ou 2, **caractérisé en ce que** l'élément de séparation (20) est ondulé en forme sinusoïdale ou plié en accordéon.

4. Élément de séparation selon au moins l'une quelconque des revendications 1 à 3, **caractérisé en ce que la** longueur et la largeur de l'élément d'espacement (20) correspondent sensiblement à la longueur et à la largeur des plis du milieu filtrant.

5. Élément de séparation selon au moins l'une quelconque des revendications 1 à 4, **caractérisé en ce que** l'élément d'espacement (20) est réalisé en un matériau incinérable.

6. Élément de séparation selon au moins l'une quelconque des revendications 1 à 5, **caractérisé en ce que** l'élément de séparation (100) est réalisé en un matériau incinérable.

7. Élément de séparation selon la revendication 6, **caractérisé en ce que**
- le milieu filtrant de coalescence (10) est en matériau synthétique, notamment en non-tissé, et/ou en matériau à base de fibres de verre, et
- le cadre (30) est en matière plastique, notamment en polystyrène.

8. Système de filtre (200; 202) destiné à séparer des particules d'aérosols d'huile de gaz brut, notamment de particules d'aérosols de lubrifiant réfrigérant à base d'huile et/ou d'émulsion, de l'air évacué d'au moins une machine de fabrication, présentant
- un boîtier (40) ayant une entrée de gaz brut (42) permettant l'entrée de gaz brut chargé de particules d'aérosols d'huile et une sortie de gaz pur (44) permettant la sortie de gaz pur purifié par le système de filtre (200), et
- au moins un élément de séparation (100) selon au moins l'une quelconque des revendications 1 à 7 disposé dans le trajet d'écoulement entre l'entrée de gaz brut (42) et la sortie de gaz pur (44).

9. Procédé de fabrication d'un élément de séparation (100) destiné à séparer des particules d'aérosols d'huile de gaz brut, notamment de particules d'aérosols de lubrifiant réfrigérant à base d'huile et/ou d'émulsion, de l'air évacué d'au moins une machine de fabrication, **caractérisé en ce qu'**
i) au moins un élément plane en papier poreux imprégné de résine phénolique est formé spatialement,
ii) le papier poreux formé spatialement et imprégné de résine phénolique est disposé de manière plane respectivement dans les plis d'un milieu filtrant de coalescence plié plusieurs fois de telle sorte qu'il sert d'élément d'espacement (20) pour les surfaces longitudinales respectives des plis et qu'il met à disposition entre les crêtes de plis et les creux des plis respectivement au moins un conduit (50) pouvant être traversé par le gaz brut, et
iii) le milieu filtrant de coalescence (10) est inséré dans un cadre (30) avec les éléments d'espacement (20) intégrés dans les plis.

10. Procédé selon la revendication 9, **caractérisé en ce que** l'élément plane est ondulé en forme sinusoïdale ou plié en accordéon à l'étape i).

11. Procédé selon la revendication 9 ou 10, **caractérisé en ce que** l'élément d'espacement (20) formé spatialement ainsi qu'imprégnée de résine phénolique est cuite au four.

12. Utilisation d'un élément de séparation (100) conçu selon au moins l'une quelconque des revendications 1 à 7 et/ou d'un élément de séparation (100) fabriqué selon au moins l'une quelconque des revendications 9 à 11 dans un système de filtre (200; 202) conçu selon la revendication 8 destiné à séparer de l'huile et/ou des aérosols d'huile de l'air évacué d'au moins une machine de fabrication, notamment d'une machine de fabrication par enlèvement de copeaux.
